(19)

**Europäisches Patentamt**

**European Patent Office**

**Office européen des brevets**

(11) **EP 4 017 786 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **20735531.4**

(22) Anmeldetag: **25.06.2020**

(51) Internationale Patentklassifikation (IPC):
***B62D 6/00*** (2006.01)

(52) Gemeinsame Patentklassifikation (CPC):
**B62D 6/008;** B62D 6/007

(86) Internationale Anmeldenummer:
**PCT/EP2020/067956**

(87) Internationale Veröffentlichungsnummer:
**WO 2021/032343 (25.02.2021 Gazette 2021/08)**

(54) **VERFAHREN UND VORRICHTUNG ZUM SCHÄTZEN EINES LENKRADDREHMOMENTS FÜR EINE MECHANISCHE RÜCKKOPPLUNG AN EINEM LENKRAD EINER LENKUNG EINES KRAFTFAHRZEUGS**

METHOD AND DEVICE FOR ESTIMATING A STEERING WHEEL TORQUE FOR MECHANICAL FEEDBACK AT A STEERING WHEEL OF A STEERING SYSTEM OF A MOTOR VEHICLE

PROCÉDÉ ET DISPOSITIF D'ESTIMATION D'UN COUPLE DE VOLANT DE DIRECTION POUR UNE RÉTROACTION MÉCANIQUE AU NIVEAU D'UN VOLANT DE DIRECTION D'UN SYSTÈME DE DIRECTION D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2019 DE 102019212432**

(43) Veröffentlichungstag der Anmeldung:
**29.06.2022 Patentblatt 2022/26**

(73) Patentinhaber: **Volkswagen Aktiengesellschaft 38440 Wolfsburg (DE)**

(72) Erfinder:
- **VAN ENDE, Kristof**
  **38102 Braunschweig (DE)**
- **KASTE, Jonas**
  **31061 Alfeld (Leine) (DE)**

(56) Entgegenhaltungen:
**EP-A1- 2 448 805**   **DE-A1-102016 212 097**
**DE-A1-102017 217 470**

Processed by Luminess, 75001 PARIS (FR)

## Beschreibung

Die Erfindung betrifft ein Verfahren und eine Vorrichtung zum Schätzen eines Lenkraddrehmoments für eine mechanische Rückkopplung an einem Lenkrad einer Lenkung eines Kraftfahrzeugs.

Durch den Anstieg des globalen Verkehrs werden die Automobilhersteller vor große Herausforderungen gestellt. Ein Forschungsschwerpunkt der Entwicklungsabteilungen ist hierbei die Lenkung von Kraftfahrzeugen. Hierbei könnten beispielsweise die derzeit üblichen elektromechanischen Lenkungen durch Steer-by-Wire-Lenkungen ersetzt werden. Bei einer solchen Steer-by-Wire-Lenkung sind das Lenkrad und die Lenkung mechanisch vollständig entkoppelt. Um dem Fahrer des Kraftfahrzeugs trotzdem ein bekanntes Lenkgefühl zu vermitteln, erfolgt eine künstliche Rückkopplung der Lenkung, beispielsweise durch Aufbringen eines künstlichen Drehmoments an dem Lenkrad.

Aus der DE 10 2004 005 348 A1 sind ein System und ein Verfahren zur Steuerung einer Steer-By-Wire-Baugruppe zur Erzeugung eines einstellbaren Lenkgefühls für einen Fahrzeugführer durch Bereitstellung der Regelung des Reaktionsmoments am Lenkrad des Fahrzeugs bekannt. Das Verfahren beinhaltet eine quantitative Beschreibung des Lenkgefühls, die durch Etablierung einer Beziehung von Lenkrad-Reaktionsmoment und Lenkradwinkel, Radmoment und Fahrzeuggeschwindigkeit erhalten wird. Das System und Verfahren schließt Steer-By-Wire-Baugruppen-Kreislauf-Rückkopplungssteuerungen mit innerer Momentschleife, Lenkrad-Geschwindigkeits-Rückkopplungsschleife und Lenkrad-Winkelpositions-Rückkopplungsschleife ein, um die Bereitstellung des Lenkgefühls, des aktiven Lenkradrücklaufs mit verschiedenen Rotationsgeschwindigkeiten, des Lenkradstops gemäß der Radwinkelposition beim Parken und die Generierung des Richtungs-Referenzwinkels zu den Rädern zu implementieren.

Aus der DE 10 2016 212 097 A1 sind eine Vorrichtung und ein Verfahren zum Schätzen eines Lenkraddrehmoments für eine mechanische Rückkopplung an einem Lenkrad eines Kraftfahrzeugs bekannt, umfassend die folgenden Schritte: Empfangen und/oder Erfassen von mindestens einem aktuellen Messwert mindestens einer Zustandsgröße des Kraftfahrzeugs über geeignete Eingangsmittel, Schätzen des aktuellen Lenkraddrehmoments mittels einer Steuerung, Ausgeben des geschätzten Lenkraddrehmoments als Lenkraddrehmomentsignal, wobei das Schätzen mit Hilfe eines künstlichen Neuronalen Netzes durchgeführt wird, wobei zu jeder der mindestens einen Zustandsgröße des Kraftfahrzeugs in einer Eingangsschicht des Neuronalen Netzes ein Eingangsneuron zum Verarbeiten des mindestens einen aktuellen Messwerts vorgesehen ist, und wobei bereitgestellte Gewichtungen, bereitgestellte Parameter und bereitgestellte Übertragungsfunktionen mindestens einer verborgenen Schicht des Neuronalen Netzes dazu verwendet werden, an einem Ausgabeneuron einer Ausgangsschicht des Neuronalen Netzes einen Ausgabewert für das geschätzte Lenkraddrehmoment zu erzeugen, welcher zum Ausgeben bereitgestellt wird.

Aus der EP 2 448 805 A1 ist ein Verfahren zum Unterstützen eines Fahrers eines Fahrzeugs während des Betriebs bekannt, indem dem Fahrer ein gewünschtes Lenkgefühl vermittelt wird, wobei das Fahrzeug eine Lenkanordnung umfasst, umfassend eine handbetätigte Lenkvorrichtung, zumindest ein Paar Bodeneingriffselemente und eine mechanische Verbindung zwischen der Lenkvorrichtung und den Bodeneingriffselementen. Das Verfahren umfasst die Schritte des Erfassens eines Lenkwinkels und des Bestimmens einer gewünschten Lenkvorrichtungs-Führungskraft basierend auf dem erfassten Lenkwinkel, des Bereitstellens des gewünschten Lenkgefühls für den Fahrer basierend auf der gewünschten Lenkvorrichtungs-Führungskraft und des Erfassens des Lenkwinkels in einer Position an einer Seite eines Bodeneingriffselements eines elastischen Lenkkraftübertragungselements in der Lenkanordnung.

Aus der DE 10 2016 212 097 A1 sind ein Verfahren und eine zugehörige Vorrichtung zum Schätzen eines Lenkraddrehmoments für eine mechanische Rückkopplung an einem Lenkrad eines Kraftfahrzeugs bekannt, umfassend die folgenden Schritte: Empfangen und/oder Erfassen von mindestens einem aktuellen Messwert mindestens einer Zustandsgröße des Kraftfahrzeugs über geeignete Eingangsmittel, Schätzen des aktuellen Lenkraddrehmoments mittels einer Steuerung, Ausgeben des geschätzten Lenkraddrehmoments als Lenkraddrehmomentsignal, wobei das Schätzen mit Hilfe eines künstlichen Neuronalen Netzes durchgeführt wird, wobei zu jeder der mindestens einen Zustandsgröße des Kraftfahrzeugs in einer Eingangsschicht des Neuronalen Netzes ein Eingangsneuron zum Verarbeiten des mindestens einen aktuellen Messwerts vorgesehen ist, und wobei bereitgestellte Gewichtungen, bereitgestellte Konstantgrößen und bereitgestellte Übertragungsfunktionen mindestens einer verborgenen Schicht des Neuronalen Netzes dazu verwendet werden, an einem Ausgabeneuron einer Ausgangsschicht des Neuronalen Netzes einen Ausgabewert für das geschätzte Lenkraddrehmoment zu erzeugen, welcher zum Ausgeben bereitgestellt wird.

Aus der DE 10 2017 217 470 A1 ist ein Verfahren zum Betreiben eines Lenksystems mit über eine Zahnstange gelenkten Rädern eines Kraftfahrzeugs mithilfe einer Zahnstangenkraftangabe bekannt, wobei eine oder mehrere Lenkungsfunktionen abhängig von der Zahnstangenkraftangabe durchgeführt werden, wobei die Zahnstangenkraftangabe mit einer Berechnung eines neuronalen Netzes ermittelt wird.

Der Erfindung liegt die Aufgabe zu Grunde, ein Verfahren und eine Vorrichtung zum Schätzen eines Lenkraddrehmoments für eine mechanische Rückkopplung an einem Lenkrad einer Lenkung eines Kraftfahrzeugs zu verbessern.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Schätzen eines Lenkraddrehmoments für eine mechanische Rückkopplung an einem Lenkrad einer Lenkung eines Kraftfahrzeugs zur Verfügung gestellt, umfassend: Empfangen und/oder Erfassen von mindestens einem aktuellen Messwert mindestens einer Zustandsgröße des Kraftfahrzeugs über geeignete Eingangsmittel, Schätzen des aktuellen Lenkraddrehmoments mittels einer Steuerung, Ausgeben des geschätzten Lenkraddrehmoments als Lenkraddrehmomentsignal, wobei das Schätzen mittels eines parametrierbaren Lenkungsmodells erfolgt, wobei dem parametrierbaren Lenkungsmodell hierzu aktuelle Messwerte zumindest einer Teilmenge der mindestens einen Zustandsgröße als Eingangsdaten zugeführt werden, und wobei Nichtlinearitäten der Lenkung ausgehend von den aktuellen Messwerten zumindest der Teilmenge der mindestens einen Zustandsgröße mit Hilfe eines Verfahrens der Künstlichen Intelligenz geschätzt werden.

Ferner wird insbesondere eine Vorrichtung zum Schätzen eines Lenkraddrehmoments für eine mechanische Rückkopplung an einem Lenkrad einer Lenkung eines Kraftfahrzeugs geschaffen, umfassend Eingangsmittel zum Empfangen und/oder Erfassen von mindestens einem aktuellen Messwert mindestens einer Zustandsgröße des Kraftfahrzeugs, eine Steuerung zum Schätzen des aktuellen Lenkraddrehmoments und zum Ausgeben des geschätzten Lenkraddrehmoments als Lenkraddrehmomentsignal, wobei die Steuerung derart ausgebildet ist, das Schätzen mittels eines parametrierbaren Lenkungsmodells durchzuführen, und dem parametrierbaren Lenkungsmodell hierzu aktuelle Messwerte zumindest einer Teilmenge der mindestens einen Zustandsgröße als Eingangsdaten zuzuführen, und Nichtlinearitäten der Lenkung ausgehend von den aktuellen Messwerten zumindest der Teilmenge der mindestens einen Zustandsgröße mit Hilfe eines Verfahrens der Künstlichen Intelligenz zu schätzen.

Die Erfindung ermöglicht es, dass sowohl ein realistischeres Lenkgefühl erzeugt werden kann als auch eine einfache Anpassung oder Veränderung des Lenkgefühls erfolgen kann. Dies wird erreicht, indem das Schätzen des Lenkraddrehmoments des Lenkrads mittels zweier unterschiedlicher Verfahren durchgeführt wird. Es wird sowohl ein parametrierbares Lenkungsmodell verwendet, insbesondere ein parametrierbares physikalischen Lenkungsmodell, wie dies klassisch beispielsweise in Servolenkungen oder Steer-by-Wire-Lenkungen eingesetzt wird, um ausgehend von den erfassten und/oder empfangenen aktuellen Messwerten der mindestens einen Zustandsgröße des Kraftfahrzeugs das Lenkraddrehmoment zu schätzen. In der Lenkung des Kraftfahrzeugs auftretende Nichtlinearitäten, welche beispielsweise durch eine, insbesondere nichtkonstante, Reibung, Elastizitäten und/oder Spiel innerhalb der Lenkung hervorgerufen werden, werden hingegen ausgehend von den erfassten und/oder empfangenen aktuellen Messwerten der mindestens einen Zustandsgröße des Kraftfahrzeugs mittels eines Verfahrens der Künstlichen Intelligenz geschätzt. Gemeinsam kann hierdurch ein verbessertes Lenkraddrehmoment geschätzt werden und ein realistischeres Lenkgefühl, wie ein Fahrer dies von einer klassischen Servolenkung kennt, erzeugt werden. Soll ein Lenkgefühl geändert werden, beispielsweise um das Verfahren in einem anderen Kraftfahrzeug, insbesondere einem anderen Kraftfahrzeugtyp, einzusetzen oder um ein aus sonstigen Gründen gewünschtes Lenkgefühl zu erzeugen, so können Parameter des parametrierbaren Lenkungsmodells auf einfache Weise verändert und angepasst werden. Das Verfahren der Künstlichen Intelligenz kann hingegen beibehalten werden.

Der Vorteil der Erfindung ist, dass das Verfahren und die Vorrichtung flexibler als die bekannten Verfahren eingesetzt werden können. Da das Anpassen insbesondere über ein Verändern der Parameter des parametrierbaren Lenkungsmodells erfolgt, kann eine zum Anpassen ansonsten notwendige zeitraubende und aufwändige Lernphase für das Verfahren der Künstlichen Intelligenz entfallen.

Die mindestens eine Zustandsgröße kann insbesondere die folgenden umfassen: einen Lenkwinkel, eine Lenkwinkeländerungsrate, eine Geschwindigkeit, eine Gierrate und/oder eine Querbeschleunigung.

Die Eingangsmittel können insbesondere eine geeignete Sensorik zum Erfassen von aktuellen Messwerten der mindestens einen Zustandsgröße umfassen. Eine solche Sensorik kann beispielsweise ein Inertialsystem sein, welches mit Hilfe einer trägen Masse translatorische und rotatorische Beschleunigungen erfasst und daraus entsprechende Zustandsgrößen des Kraftfahrzeugs ableitet. Ferner können die Eingangsmittel auch eine geeignete Schnittstelle zum Abfragen von aktuellen Messwerten der mindestens einen Zustandsgröße, beispielsweise über einen CAN-Bus, von einer Fahrzeugsteuerung umfassen. Insbesondere kann auch vorgesehen sein, dass einzelne oder mehrere der mindestens einen Zustandsgröße indirekt abgeleitet werden. Beispielsweise können entsprechende Zustandsgrößen mit Hilfe eines Differential Global Positioning Systems (DGPS) erzeugt werden.

Der Begriff Nichtlinearität(en) soll insbesondere nichtlineare Effekte bei einer mechanischen Rückkopplung an einem Lenkrad bezeichnen, insbesondere nichtlineare Effekte bei der mechanischen Rückkopplung, wie diese bei einer Servolenkung auftreten. Solche nichtlinearen Effekte können insbesondere durch eine, insbesondere nichtkonstante, Reibung, Elastizitäten und/oder Spiel etc. hervorgerufen werden.

Verfahren der Künstlichen Intelligenz sind insbesondere Verfahren, die während einer überwachten und/oder unüberwachten Lernphase trainiert werden können, um in einer Anwendungs- bzw. Inferenzphase ausgehend von Eingangsdaten mindestens einen Ausgangswert zu schätzen. Beispielsweise können Verfahren der Künstlichen Intelligenz eines der folgenden umfassen: ein Bayessches Netz, statistische Verfahren und/oder statistische Modelle (z.B. Expectation-Maximization-Algorithmus) und/oder künstliche Neuronale Netze.

Die Steuerung kann als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile der Steuerung einzeln oder zusammengefasst als anwendungsspezifische integrierte Schaltung (ASIC) ausgebildet sind.

In einer Ausführungsform ist vorgesehen, dass während einer Referenzfahrt erfasste Referenzmesswerte der Zustandsgrößen des Kraftfahrzeugs während einer Lernphase als Referenz-Eingangsdaten des parametrierbaren Lenkungsmodells und des Verfahrens der Künstlichen Intelligenz verwendet werden, wobei während der Lernfahrt jeweils zugehörig am Lenkrad mittels eines Lenkraddrehmomentsensors erfasste Lenkraddrehmomente zugehörige Referenz-Ausgabewerte bilden, die während der Lernphase als Referenz für ein geschätztes Lenkraddrehmoment verwendet werden. Die Referenz-Eingangsdaten und die zugehörigen Referenz-Ausgabewerte sind insbesondere an einer Servolenkung (engl. Electric Power Steering, EPS) erfasste Referenzdaten. Durch das Verwenden von derartigen Referenzdaten, insbesondere einer Servolenkung, kann als Referenz ein Lenkgefühl einer mechanischen Lenkung im Rahmen der Lernphase angestrebt werden. Die erfassten Referenzdaten werden dann als Grundwahrheit (engl. Ground truth) in der Lernphase verwendet. Die Referenzdaten werden insbesondere zeitabhängig bzw. zeitaufgelöst erfasst und für die Lernphase bereitgestellt.

Es kann vorgesehen sein, dass für unterschiedliche Kraftfahrzeugtypen (Kleinwagen, Mittelklassewagen, Kleinbus, Transporter, Oberklassewagen etc.) jeweils eigene Referenzdaten erfasst und bereitgestellt werden, um hierdurch ein jeweils charakteristisches Lenkgefühl nachbilden zu können.

In einer Ausführungsform ist vorgesehen, dass das Verfahren der Künstlichen Intelligenz im Rahmen der Lernphase darauf trainiert wird, eine Differenz zwischen einem ausgehend von den Referenz-Eingangsdaten mittels des parametrierbaren Lenkungsmodells geschätzten Lenkraddrehmoments und einem zugehörigen Referenz-Ausgabewert des Lenkraddrehmoments zu schätzen. Dies ermöglicht es, das Lenkgefühl im Wesentlichen über das parametrierbare Lenkungsmodell einzustellen. Eine verbleibende Differenz zwischen dem von dem parametrierbaren Lenkungsmodell und dem über Vorgabe der Referenzdaten angestrebten Lenkgefühl wird dann mittels des Verfahrens der Künstlichen Intelligenz geschätzt. Die Differenz bildet hierbei insbesondere die Eigenschaften der Lenkung ab, die von dem parametrierbaren Lenkungsmodell nicht erfasst bzw. nicht modelliert werden. Anschließend werden die Schätzwerte für das Lenkraddrehmoment und die Differenz aufsummiert und ergeben einen verbesserten Schätzwert für das Lenkraddrehmoment.

In einer Ausführungsform ist vorgesehen, dass das Verfahren der Künstlichen Intelligenz den Einsatz eines künstlichen Neuronalen Netzes umfasst, wobei einer Eingangsschicht des künstlichen Neuronalen Netzes als Eingangsdaten zumindest eine Teilmenge der mindestens einen Zustandsgröße zugeführt wird. An einer Ausgangsschicht inferiert das künstliche Neuronale Netz als Ausgangsdaten einen Schätzwert beispielsweise für die Differenz. Das künstliche Neuronale Netz umfasst insbesondere mindestens eine Zwischenschicht.

In einer Ausführungsform ist vorgesehen, dass Gewichtungen und Parameter des künstlichen Neuronalen Netzes während der Lernphase bestimmt werden. Insbesondere wird das künstliche Neuronale Netz hierbei auf das Schätzen einer Differenz zwischen einem mittels des parametrierbaren Lenkungsmodells geschätzten Lenkraddrehmoments und dem als Grundwahrheit betrachteten Referenz-Ausgabewert der Referenzdaten trainiert.

In einer Ausführungsform ist vorgesehen, dass im Rahmen der Lernphase auch eine Struktur des künstlichen Neuronalen Netzes verändert werden kann. Hierdurch kann eine Leistungsfähigkeit (auch als Performanz bezeichnet) des künstlichen Neuronalen Netzes verbessert werden. Ferner kann beispielsweise auch eine Größe des künstlichen Neuronalen Netzes und ein hiermit einhergehender Rechenaufwand während einer Anwendungsphase (Inferenzphase) beispielsweise durch Prunen des künstlichen Neuronalen Netzes reduziert werden.

In einer Ausführungsform ist vorgesehen, dass das künstliche Neuronale Netz nach einem Ändern von Parametern des parametrierbaren Lenkungsmodells in einer weiteren Lernphase nachtrainiert wird. Hierdurch können Nichtlinearitäten einer Lenkung, die beispielsweise fahrzeugspezifisch und/oder fahrzeugtypspezifisch sind, verbessert geschätzt werden. Im Gegensatz zu einem vollständigen Lernphase kann das Durchführen des Nachtrainierens deutlich zeitsparender durchgeführt werden.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Vorrichtung zum Schätzen eines Lenkraddrehmoments für eine mechanische Rückkopplung an einem Lenkrad einer Lenkung eines Kraftfahrzeugs;

Fig. 2     eine schematische Darstellung zur Verdeutlichung der Lernphase einer Ausführungsform des Verfahrens am Beispiel eines künstlichen Neuronalen Netzes;

Fig. 3 ein schematisches Flussdiagramm zur Verdeutlichung einer Ausführungsform des Verfahrens.

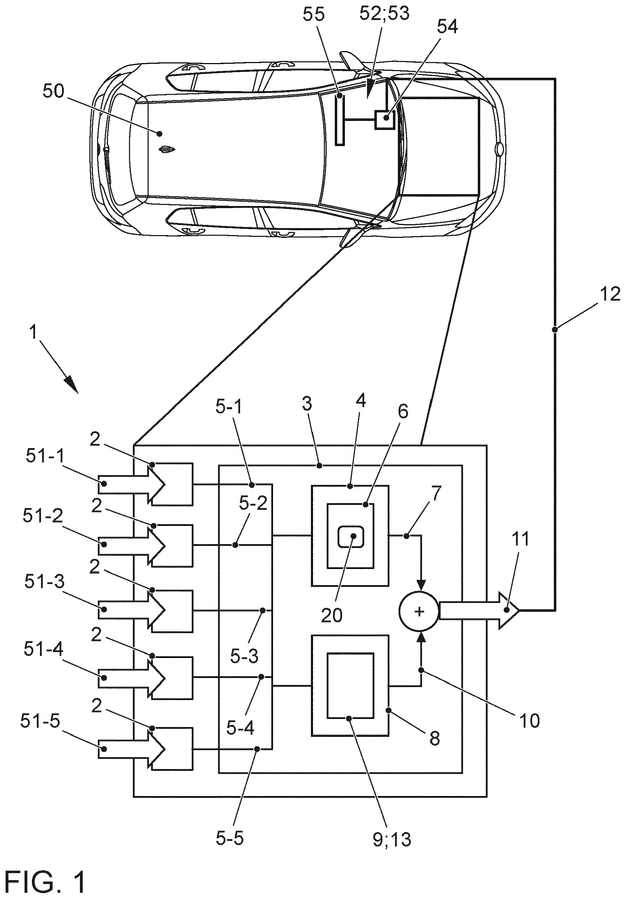

In Fig. 1 ist eine schematische Darstellung einer Ausführungsform der Vorrichtung 1 zum Schätzen eines Lenkraddrehmoments 11 für eine mechanische Rückkopplung an einem Lenkrad 55 einer Lenkung 52 eines Kraftfahrzeugs 50 gezeigt. Die Lenkung 52 ist insbesondere eine Steer-by-Wire-Lenkung 53. Die Vorrichtung 1 umfasst Eingangsmittel 2 zum Empfangen und/oder Erfassen von aktuellen Messwerten 5-x von Zustandsgrößen 51-x des Kraftfahrzeugs 50 und eine Steuerung 3.

Die Steuerung 3 umfasst ein Schätzmodul 4, das ausgehend von den erfassten und/oder empfangenen aktuellen Messwerten 5-x der Zustandsgrößen 51-x mittels eines parametrierbaren Lenkungsmodell 6 ein erstes Lenkraddrehmoment 7 schätzt. Das parametrierbare Lenkungsmodell 6 ist über fahrzeugspezifische und/oder fahrzeugtypspezifische und/oder individuelle Parameter 20 parametrierbar bzw. parametriert. Das parametrierbare Lenkungsmodell 6 kann beispielsweise als entsprechend ausgestalteter Programmcode auf einem Mikrocontroller oder einem Mikroprozessor des Schätzmoduls 4 bereitgestellt werden.

Ein einfaches Beispiel für das parametrierbare Lenkungsmodell 6 geht von einem Lenkungsmodell einer klassischen Servolenkung aus. Ausgehend von einem Kräftegleichgewicht wird die Beschleunigung der Zahnstange der Servolenkung mit dem Moment vom Ritzel der Lenkstange auf die Zahnstange und dem Moment des Servomotors auf die Zahnstange verknüpft:

$$m * y'' + F_t{}^* + F_r = (M_r / r_1) + (M_s / r_2),$$

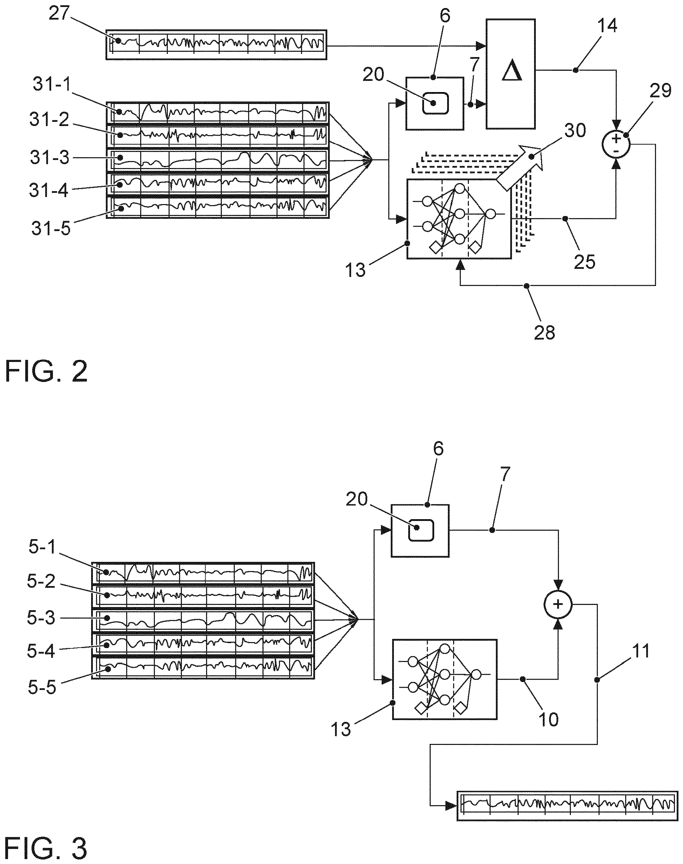

wobei m die Masse der Zahnstange, y'' die zweite zeitliche Ableitung einer Zahnstangenposition y, $F_t{}^*$ die aus den Rückstellkräften der Räder resultierende Kraft, $F_r$ die Reibung, $M_r$ das Moment vom Ritzel der Lenksäule auf die Zahnstange, $M_s$ das Moment des Servomotors der Lenkung auf die Zahnstange, $r_1$ die Übersetzung der Lenksäule auf die Zahnstange und $r_2$ die Übersetzung des Servomotors auf die Zahnstange ist. Da alle anderen Werte beispielsweise auch für eine Steer-by-Wire-Lenkung 53 bekannt sind oder berechnet werden können bzw. als Parameter zum Hervorrufen eines bestimmten Lenkgefühls fest vorgegeben sind oder während einer Lernphase (vgl. Fig. 2) geschätzt werden können, kann ausgehend von diesem Lenkungsmodell das erste Lenkraddrehmoment 7 über das Moment $M_r$ geschätzt werden. Das Moment $M_s$ des Servomotors wird bei der Steer-by-Wire-Lenkung 53 hierbei insbesondere über einen als Zustandsgröße 51-x am Lenkrad 55 erfassten Lenkwinkel und eine erfasste oder abgeleitete Lenkradwinkeländerungsrate berechnet. Alternativ zu diesem einfachen Beispiel können auch andere parametrierbare Lenkungsmodelle 6 verwendet werden.

Ferner umfasst die Steuerung 3 ein Nichtlinearitätenmodul 8, das ausgehend von den erfassten und/oder empfangenen aktuellen Messwerten 5-x der Zustandsgrößen 51-x mittels eines Verfahrens einer Künstlichen Intelligenz 9, insbesondere mittels eines künstlichen Neuronalen Netzes 13, aktuelle Nichtlinearitäten 10 der Lenkung schätzt. Das Verfahren der Künstlichen Intelligenz 9, insbesondere das künstliche Neuronale Netz 13, kann beispielsweise als entsprechend ausgestalteter Programmcode auf einem Mikrocontroller oder einem Mikroprozessor des Nichtlinearitätenmoduls 8 bereitgestellt werden.

Das geschätzte aktuelle erste Lenkraddrehmoment 7 und die geschätzten aktuellen Nichtlinearitäten 10 werden aufsummiert und ergeben zusammen ein geschätztes aktuelles Lenkraddrehmoment 11. Das geschätzte aktuelle Lenkraddrehmoment 11 wird als Lenkraddrehmomentsignal 12 ausgegeben und bereitgestellt, um beispielsweise einen hierfür vorgesehenen Aktor 54 an dem Lenkrad 55 mit einem dem geschätzten aktuellen Lenkraddrehmoment 11 entsprechenden Drehmoment zu beaufschlagen. Ein Fahrer des Kraftfahrzeugs 50 erhält hierdurch an der Steer-by-Wire-Lenkung 53 eine mechanische Rückkopplung, welche der einer elektromechanischen Lenkung (z.B. Servolenkung) entspricht.

Es ist insbesondere vorgesehen, dass während einer Referenzfahrt erfasste Referenzmesswerte der Zustandsgrößen 51-x des Kraftfahrzeugs 50 während einer Lernphase als Referenz-Eingangsdaten des parametrierbaren Lenkungsmodells 6 und des Verfahrens der Künstlichen Intelligenz 9, insbesondere des künstlichen Neuronalen Netzes 13, verwendet werden, wobei während der Lernfahrt jeweils zugehörig am Lenkrad 55 mittels eines Lenkraddrehmomentsensors erfasste Lenkraddrehmomente zugehörige Referenz-Ausgabewerte bilden, die während der Lernphase als Referenz für das geschätzte Lenkraddrehmoment 11 verwendet werden.

Hierbei ist insbesondere vorgesehen, dass das Verfahren der Künstlichen Intelligenz 9, insbesondere das künstliche Neuronale Netz 13, im Rahmen der Lernphase darauf trainiert wird, eine Differenz zwischen einem ausgehend von den Referenz-Eingangsdaten mittels des parametrierbaren Lenkungsmodells 6 geschätzten ersten Lenkraddrehmoments 7 und einem zugehörigen Referenz-Ausgabewert des Lenkraddrehmoments zu schätzen. Die Differenz umfasst dann insbesondere die Nichtlinearitäten 10.

Eine schematische Darstellung zur Verdeutlichung der Lernphase ist am Beispiel eines künstlichen Neuronalen Netzes 13 in der Fig. 2 gezeigt. Die Referenz-Eingangsdaten 31-x können beispielsweise zu den folgenden Zustandsgrößen des Kraftfahrzeugs gehören: eine laterale Beschleunigung, eine Gierrate, eine Geschwindigkeit, einen Lenkwinkel und/oder eine Lenkwinkelrate. Die Zustandsgrößen bzw. die Referenz-Eingangsdaten 31-x werden beispielsweise im Rahmen einer Referenzfahrt von hierfür vorgesehenen Sensoren erfasst und zeitabhängig für einen bestimmten Zeitraum aufgezeichnet. Die Lernphase kann dann auf Grundlage der aufgezeichneten Referenz-Eingangsdaten 31-x durchgeführt werden. Parallel hierzu wird ein Referenzwert-Ausgabewert 27 über die Zeit erfasst. Dieser Referenz-Ausgabewert 27 ist ein direkt am Lenkrad gemessenes Lenkraddrehmoment. Handelt es sich bei der Lenkung um eine elektromechanische Lenkung (z.B. eine Servolenkung), so wird hierzu beispielsweise ein entsprechender mit dem Lenkrad gekoppelter Drehmomentsensor verwendet.

Die Referenz-Eingangsdaten 31-x werden dem parametrierbaren Lenkungsmodell 6 zugeführt. Dieses ist auf das Hervorrufen eines gewünschten Lenkgefühls parametriert und schätzt ausgehend von den Referenz-Eingangsdaten 31-x ein erstes Lenkraddrehmoment 7.

Aus dem Referenzwert-Ausgabewert 27 und dem geschätzten ersten Lenkraddrehmoment 7 wird eine Differenz 14 gebildet, die ein Maß für in der (Referenz-)Lenkung auftretende Nichtlinearitäten, das heißt nichtlineare Effekte wie Reibung, Elastizitäten und/oder Spiel etc., ist.

Während der Lernphase wird das künstliche Neuronale Netz 13 darauf trainiert, ausgehend von den Referenz-Eingangsdaten 31-x einen Wert für die Differenz 14 zu schätzen.

In einer ersten Maßnahme der Lernphase wird beispielsweise eine Topologie des künstlichen Neuronalen Netzes 13 zufällig gewählt. Liegt nur eine verborgene Schicht vor, kann dies beispielsweise eine Anzahl von Neuronen in der verborgenen Schicht sein. Ebenfalls zufällig werden jeweils die Gewichtungen und die Parameter für einzelne Neuronen des künstlichen Neuronalen Netzes 13 gewählt.

In einer nächsten Maßnahme werden die Referenz-Eingangsdaten 31-x dem künstlichen Neuronalen Netz 13 als Eingangsdaten zugeführt und ein Ausgabewert 25 berechnet. Genauer gesagt werden die zeitabhängigen Referenz-Eingangsdaten 31-x dem künstlichen Neuronalen Netz 13 als Eingangsdaten zugeführt und entsprechend ein zugehöriger, ebenfalls zeitabhängiger Ausgabewert 25 vom künstlichen Neuronalen Netz 13 inferiert.

Der vom künstlichen Neuronalen Netz 13 inferierte Ausgabewert 25 wird anschließend mit der Differenz 14 verglichen. Hieraus wird ein Optimierungskriterium 28 ermittelt. Ein solches Optimierungskriterium 28 kann beispielsweise eine Fehlerfunktion 29, beispielsweise der mittlere quadratische Fehler zwischen dem Ausgabewert 25 und der Differenz 14 sein. Das Optimierungskriterium 28 ist ebenfalls eine Funktion der Zeit. Das Optimierungskriterium 28 kann dann über die Zeit zusammengefasst werden, beispielsweise durch Summenbildung.

Die Gewichtungen und die Parameter der Neuronen des künstlichen Neuronalen Netzes 13 werden mit Hilfe von Optimierungsverfahren, beispielsweise dem Levenberg-Marquardt-Back-Propagation-(LMBP)-Verfahren, derart angepasst, sodass das Optimierungskriterium 28 verbessert wird, beispielsweise indem ein mittlerer quadratischer Fehler minimiert wird. Diese Optimierung 30 wird solange wiederholt, bis das Optimierungskriterium 28 erfüllt ist, beispielsweise ein mittlerer quadratischer Fehler einen vorgegebenen Wert unterschritten hat.

Die nach Durchführen der Lernphase vorliegenden Gewichtungen und Parameter werden beim Schätzen der Differenz, das heißt insbesondere der Nichtlinearitäten, verwendet.

Das Vorgehen ist bei anderen Verfahren der Künstlichen Intelligenz prinzipiell identisch. Das jeweils verwendete Verfahren bzw. Parameter des jeweiligen Verfahrens werden im Rahmen einer Lernphase anhand eines jeweils geeigneten Optimierungskriteriums 28 bestimmt.

In Fig. 3 ist ein schematisches Flussdiagramm zur Verdeutlichung einer Ausführungsform des Verfahrens gezeigt. Die aktuellen Messwerte 5-x der Zustandsgrößen des Kraftfahrzeugs werden fortlaufend sowohl dem parametrierbaren Lenkungsmodell 6 als auch dem trainierten künstlichen Neuronalen Netz 13 als Eingangsdaten zugeführt.

Ausgehend von den aktuellen Messwerten 5-x schätzt das parametrierbare Lenkungsmodell 6 fortlaufend ein aktuelles erstes Lenkraddrehmoment 7. Ebenfalls ausgehend von den aktuellen Messwerten 5-x inferiert das trainierte künstliche Neuronale Netz 13 zeitgleich eine Differenz bzw. die Nichtlinearitäten 10 der Lenkung bzw. im Lenkgefühl. Das geschätzte aktuelle erste Lenkraddrehmoment 7 und die inferierten Nichtlinearitäten 10 werden aufsummiert. Das Summensignal ist ein fortlaufend geschätztes Lenkraddrehmoment 11.

Das geschätzte Lenkraddrehmoment 11 wird dann einem Aktor an einem Lenkrad eines Kraftfahrzeugs zugeführt. Insbesondere wird das geschätzte Lenkraddrehmoment 11 dazu verwendet, eine mechanische Rückkopplung an einer Steer-by-Wire-Lenkung 53 zu geben (vgl. Fig. 1).

Der Vorteil der Vorrichtung und des Verfahrens ist, dass trotz einer verbesserten Schätzung des Lenkraddrehmoments 11 weiterhin eine einfache Anpassung von Parametern des parametrierbaren Lenkungsmodells 6 möglich ist. Hierdurch kann ein Lenkgefühl angepasst werden. Ein Training des künstlichen Neuronalen Netzes 13 ist hingegen nicht notwendig.

Es kann jedoch vorgesehen sein, dass das künstliche Neuronale Netz 13 nach einem Ändern von Parametern 20 des parametrierbaren Lenkungsmodells 6 in einer weiteren Lernphase nachtrainiert wird.

**Bezugszeichenliste**

1 Vorrichtung
2 Eingangsmittel
3 Steuerung
4 Schätzmodul
5-x Messwert
6 parametrierbares Lenkungsmodell
7 erstes Lenkraddrehmoment
8 Nichtlinearitätenmodul
9 Verfahren der Künstliche Intelligenz
10 aktuelle Nichtlinearität
11 geschätztes Lenkraddrehmoment
12 Lenkraddrehmomentsignal
13 künstliches Neuronales Netz
14 Differenz
20 Parameter
25 Ausgabewert
27 Referenz-Ausgabewert
28 Optimierungskriterium
29 Fehlerfunktion
30 Optimierung
31-x Referenz-Eingangsdaten
50 Kraftfahrzeug
51-x Zustandsgröße
52 Lenkung
53 Steer-by-Wire-Lenkung
54 Aktor
55 Lenkrad

**Patentansprüche**

1. Verfahren zum Schätzen eines Lenkraddrehmoments (11) für eine mechanische Rückkopplung an einem Lenkrad (55) einer Lenkung (52) eines Kraftfahrzeugs (50), umfassend:

   Empfangen und/oder Erfassen von mindestens einem aktuellen Messwert (5-x) mindestens einer Zustandsgröße (51-x) des Kraftfahrzeugs (50) über geeignete Eingangsmittel (2),
   Schätzen des aktuellen Lenkraddrehmoments (11) mittels einer Steuerung (3), Ausgeben des geschätzten Lenkraddrehmoments (11) als Lenkraddrehmomentsignal (12),
   wobei das Schätzen mittels eines parametrierbaren Lenkungsmodells (6) erfolgt, wobei dem parametrierbaren Lenkungsmodell (6) hierzu aktuelle Messwerte (5-x) zumindest einer Teilmenge der mindestens einen Zustandsgröße (51-x) als Eingangsdaten zugeführt werden, und **dadurch gekennzeichnet, dass** Nichtlinearitäten (10) der Lenkung (52) ausgehend von den aktuellen Messwerten (5-x) zumindest der Teilmenge der mindestens einen Zustandsgröße (51-x) mit Hilfe eines Verfahrens der Künstlichen Intelligenz (9) geschätzt werden.

2. Verfahren nach Anspruch 1, **dadurch gekennzeichnet, dass** während einer Referenzfahrt erfasste Referenzmesswerte der Zustandsgrößen (51-x) des Kraftfahrzeugs (50) während einer Lernphase als Referenz-Eingangsdaten (31-x) des parametrierbaren Lenkungsmodells (8) und des Verfahrens der Künstlichen Intelligenz (9) verwendet werden, wobei während der Lernfahrt jeweils zugehörig am Lenkrad (55) mittels eines Lenkraddrehmomentsensors erfasste Lenkraddrehmomente zugehörige Referenz-Ausgabewerte (27) bilden, die während der Lernphase als Referenz für ein geschätztes Lenkraddrehmoment (11) verwendet werden.

3. Verfahren nach Anspruch 2, **dadurch gekennzeichnet, dass** das Verfahren der Künstlichen Intelligenz (9) im Rahmen der Lernphase darauf trainiert wird, eine Differenz (14) zwischen einem ausgehend von den Referenz-Eingangsdaten (31-x) mittels des parametrierbaren Lenkungsmodells (6) geschätzten Lenkraddrehmoments (7) und einem zugehörigen Referenz-Ausgabewert (27) des Lenkraddrehmoments zu schätzen.

4. Verfahren nach einem der vorangegangenen Ansprüche, **dadurch gekennzeichnet, dass** das Verfahren der Künstlichen Intelligenz (9) den Einsatz eines künstlichen Neuronalen Netzes (13) umfasst, wobei einer Eingangsschicht des künstlichen Neuronalen Netzes (13) als Eingangsdaten zumindest eine Teilmenge der mindestens einen Zustandsgröße (51-x) zugeführt wird.

5. Verfahren nach Anspruch 4, **dadurch gekennzeichnet, dass** Gewichtungen und Parameter des künstlichen Neuronalen Netzes (13) während der Lernphase bestimmt werden.

6. Verfahren nach Anspruch 4 oder 5, **dadurch gekennzeichnet, dass** im Rahmen der Lernphase auch eine Struktur des künstlichen Neuronalen Netzes (13) verändert werden kann.

7. Verfahren nach einem der vorangegangenen Ansprüche, **dadurch gekennzeichnet, dass** das künstliche Neuronale Netz (13) nach einem Ändern von Parametern (20) des parametrierbaren Lenkungsmodells (6) in einer weiteren Lernphase nachtrainiert wird.

8. Vorrichtung (1) zum Schätzen eines Lenkraddrehmoments (11) für eine mechanische Rückkopplung an einem Lenkrad (55) einer Lenkung (52) eines Kraftfahrzeugs (50), umfassend:

Eingangsmittel (2) zum Empfangen und/oder Erfassen von mindestens einem aktuellen Messwert (5-x) mindestens einer Zustandsgröße (51-x) des Kraftfahrzeugs (50), eine Steuerung (3) zum Schätzen des aktuellen Lenkraddrehmoments (11) und zum Ausgeben des geschätzten Lenkraddrehmoments (11) als Lenkraddrehmomentsignal (12),
wobei die Steuerung (3) derart ausgebildet ist, das Schätzen mittels eines parametrierbaren Lenkungsmodells (6) durchzuführen, und dem parametrierbaren Lenkungsmodell (6) hierzu aktuelle Messwerte (5-x) zumindest einer Teilmenge der mindestens einen Zustandsgröße (51-x) als Eingangsdaten zuzuführen, **gekennzeichnet durch** mrd Nichtlinearitäten (10) der Lenkung (52) ausgehend von den aktuellen Messwerten (5-x) zumindest der Teilmenge der mindestens einen Zustandsgröße (51-x) mit Hilfe eines Verfahrens der Künstlichen Intelligenz (9) zu schätzen.

9. Kraftfahrzeug (50), umfassend mindestens eine Vorrichtung (1) nach Anspruch 8.

10. Kraftfahrzeug (50) nach Anspruch 9, **dadurch gekennzeichnet, dass** das Kraftfahrzeug (50) eine Steer-by-Wire-Lenkung (53) umfasst und die Vorrichtung (1) zum Schätzen des Lenkraddrehmoments (11) für ein Lenkrad (55) der Steer-by-Wire-Lenkung (53) verwendet wird.

**Claims**

1. A method for estimating a steering wheel torque (11) for mechanical feedback at a steering wheel (55) of a steering system (52) of a motor vehicle (50), comprising:

   receiving and/or detecting at least one current measured value (5-x) of at least one state variable (51-x) of the motor vehicle (50) via suitable input means (2),
   estimating the current steering wheel torque (11) by means of a controller (3), and outputting the estimated steering wheel torque (11) as a steering wheel torque signal (12),
   the estimating being carried out by means of a parameterizable steering system model (6), and, for this purpose, current measured values (5-x) of at least a subset of the at least one state variable (51-x) being supplied to the parameterizable steering system model (6) as input data, and
   **characterized in that**
   nonlinearities (10) of the steering system (52) are estimated, starting from the current measured values (5-x) of at least the subset of the at least one state variable (51-x), by means of an artificial intelligence method (9).

2. The method according to claim 1, **characterized in that** reference measured values of the state variables (51-x) of the motor vehicle (50), which reference measured values are detected during a reference run, are used during a learning phase as reference input data (31-x) for the parameterizable steering system model (8) and the artificial intelligence method (9), with steering wheel torques respectively detected at the steering wheel (55) by means of a steering wheel torque sensor during the learning run forming associated reference output values (27) which are used during the learning phase as a reference for an estimated steering wheel torque (11).

3. The method according to claim 2, **characterized in that** the artificial intelligence method (9) is trained as part of the learning phase to estimate a difference (14) between a steering wheel torque (7) estimated starting from the reference input data (31-x) by means of the parameterizable steering system model (6) and an associated reference output value (27) of the steering wheel torque.

4. The method according to any of the preceding claims,
   **characterized in that**
   the artificial intelligence method (9) comprises the use of an artificial neural network (13), at least a subset of the at least one state variable (51-x) being supplied as input data to an input layer of the artificial neural network (13).

5. The method according to claim 4, **characterized in that** weightings and parameters of the artificial neural network (13) are determined during the learning phase.

6. The method according to either claim 4 or claim 5, **characterized in that** a structure of the artificial neural network (13) can also be changed as part of the learning phase.

7. The method according to any of the preceding claims,
   **characterized in that**
   after parameters (20) of the parameterizable steering system model (6) have been changed, the artificial neural network (13) is retrained in a further learning phase.

8. A device (1) for estimating a steering wheel torque (11) for mechanical feedback at a steering wheel (55) of a steering system (52) of a motor vehicle (50), comprising:

input means (2) for receiving and/or detecting at least one current measured value (5-x) of at least one state variable (51-x) of the motor vehicle (50), and a controller (3) for estimating the current steering wheel torque (11) and for outputting the estimated steering wheel torque (11) as a steering wheel torque signal (12),

the controller (3) being designed to carry out the estimating by means of a parameterizable steering system model (6), and, for this purpose, to supply current measured values (5-x) of at least a subset of the at least one state variable (51-x) to the parameterizable steering system model (6) as input data,

**characterized by**

estimating nonlinearities (10) of the steering system (52), starting from the current measured values (5-x) of at least the subset of the at least one state variable (51-x), by means of an artificial intelligence method (9).

9. A motor vehicle (50), comprising at least one device (1) according to claim 8.

10. The motor vehicle (50) according to claim 9, **characterized in that** the motor vehicle (50) comprises a steer-by-wire steering system (53) and the device (1) is used for estimating the steering wheel torque (11) for a steering wheel (55) of the steer-by-wire steering system (53).

**Revendications**

1. Procédé d'estimation d'un couple de volant de direction (11) pour une rétroaction mécanique au niveau d'un volant de direction (55) d'un système de direction (52) d'un véhicule automobile (50), comprenant :

la réception et/ou la capture d'au moins une valeur de mesure réelle (5-x) d'au moins une variable d'état (51-x) du véhicule automobile (50) par l'intermédiaire de moyens d'entrée (2) appropriés,

l'estimation du couple de volant de direction (11) réel au moyen d'un contrôleur (3), la délivrance du couple de volant de direction (11) estimé en tant que signal de couple de volant de direction (12),

dans lequel l'estimation s'effectue au moyen d'un modèle de système de direction paramétrable (6), dans lequel dans ce but des valeurs de mesure réelles (5-x) d'au moins un sous-ensemble de la au moins une variable d'état (51-x) sont fournies en tant que données d'entrée au modèle de système de direction paramétrable (6) et

**caractérisé en ce que**

des non-linéarités (10) du système de direction (52) sont estimées, à partir des valeurs de mesure réelles (5-x) d'au moins le sous-ensemble de l'au moins une variable d'état (51-x) à l'aide d'un procédé d'intelligence artificielle (9).

2. Procédé selon la revendication 1, **caractérisé en ce que** pendant un trajet de référence, des valeurs de mesure de référence capturées des variables d'état (51-x) du véhicule automobile (50) sont utilisées pendant une phase d'apprentissage en tant que données d'entrée de référence (31-x) du modèle de système de direction paramétrable (8) et du procédé d'intelligence artificielle (9), dans lequel pendant le trajet d'apprentissage, respectivement des couples de volants de direction capturés associés au volant de direction (55) au moyen d'un capteur de couple de volant de direction forment des valeurs de sortie de référence (27) associées, qui sont utilisées pendant la phase d'apprentissage en tant que référence pour un couple de volant de direction (11) estimé.

3. Procédé selon la revendication 2, **caractérisé en ce que** le procédé d'intelligence artificielle (9) est entraîné dans le cadre de la phase d'apprentissage, pour estimer une différence (14) entre un couple de volant de direction (7) estimé à partir des données d'entrée de référence (31-x) au moyen du modèle de système de direction paramétrable (6) et une valeur de sortie de référence (27) associée du couple de volant de direction.

4. Procédé selon l'une quelconque des revendications précédentes, **caractérisé en ce que** le procédé d'intelligence artificielle (9) comprend l'utilisation d'un réseau neuronal artificiel (13), dans lequel au moins un sous-ensemble de l'au moins une variable d'état (51-x) est fourni à une couche d'entrée du réseau neuronal artificiel (13) en tant que données d'entrée.

5. Procédé selon la revendication 4, **caractérisé en ce que** des pondérations et des paramètres du réseau neuronal artificiel (13) sont déterminés pendant la phase d'apprentissage.

6. Procédé selon la revendication 4 ou 5, **caractérisé en ce que** dans le cadre de la phase d'apprentissage, une structure du réseau neuronal artificiel (13) peut également être modifiée.

7. Procédé selon l'une quelconque des revendications précédentes, **caractérisé en ce que** le réseau neuronal artificiel (13) est de nouveau entraîné après une modification de paramètres (20) du modèle de système de direction paramétrable (6) dans une phase d'apprentissage supplémentaire.

8. Dispositif (1) d'estimation d'un couple de volant de direction (11) pour une rétroaction mécanique au niveau d'un volant de direction (55) d'un système de direction (52) d'un véhicule automobile (50), comprenant :

des moyens d'entrée (2) destinés à recevoir et/ou capturer au moins une valeur de mesure réelle (5-x) d'au moins une variable d'état (51-x) du véhicule automobile (50), un contrôleur (3) destiné à estimer le couple de volant de direction réel (11) et à délivrer le couple de volant de direction (11) estimé en tant que signal de couple de volant de direction (12),
dans lequel le contrôleur (3) est conçu pour réaliser l'estimation au moyen d'un modèle de système de direction paramétrable (6) et dans ce but, des valeurs de mesure réelles (5-x) d'au moins un sous-ensemble de la au moins une variable d'état (51-x) sont fournies en tant que données d'entrée au modèle de système de direction paramétrable (6),
**caractérisé par**
l'estimation de non-linéarités (10) du système de direction (52) à partir des valeurs de mesure réelles (5-x) d'au moins le sous-ensemble de l'au moins une variable d'état (51-x) à l'aide d'un procédé d'intelligence artificielle (9).

9. Véhicule automobile (50) comprenant au moins un dispositif (1) selon la revendication 8.

10. Véhicule automobile (50) selon la revendication 9, **caractérisé en ce que** le véhicule automobile (50) comprend un système de direction à commande par câble (53) et le dispositif (1) est utilisé pour estimer le couple de volant de direction (11) pour un volant de direction (55) du système de direction à commande par câble (53).

FIG. 1

FIG. 2

FIG. 3

**IN DER BESCHREIBUNG AUFGEFÜHRTE DOKUMENTE**

**In der Beschreibung aufgeführte Patentdokumente**

- DE 102004005348 A1
- DE 102016212097 A1
- EP 2448805 A1
- DE 102017217470 A1